# EUROPÄISCHE PATENTSCHRIFT

(11) **EP 3 613 273 B1**
(45) Veröffentlichungstag und Bekanntmachung des Hinweises auf die Patenterteilung: **05.08.2026**
(21) Anmeldenummer: 19178620.1
(22) Anmeldetag: 06.06.2019
(51) Int. Cl.: A01D 41/12, A01D 75/28, A01F 12/40

(54) **MÄHDRESCHER**
COMBINE HARVESTER
MOISSONNEUSE-BATTEUSE

(30) Priorität: 23.08.2018 DE 102018120651
(43) Veröffentlichungstag der Anmeldung: 26.02.2020
(73) Patentinhaber: CLAAS Selbstfahrende Erntemaschinen GmbH, 33428 Harsewinkel (DE)
(72) Erfinder: Baumgarten, Joachim, 48361 Beelen (DE); Bormann, Bastian, 33334 Gütersloh (DE); Heitmann, Christoph, 48231 Warendorf (DE); Terörde, Stefan, 48231 Warendorf (DE); Vieregge, Christopher, 32694 Dörentrup (DE); Wilken, Andreas, 49143 Bissendorf (DE); Schäfer, Klaus, 59302 Oelde (DE)
(74) Vertreter: CLAAS Gruppe

(56) Entgegenhaltungen:
- EP-A1- 1 532 858
- EP-A1- 1 570 726
- WO-A1-03/005803
- DE-A1- 102014 113 965
- DE-A1- 102016 118 187
- US-A1- 2011 093 169

## Beschreibung

Die Erfindung betrifft einen Mähdrescher zur Abarbeitung eines landwirtschaftlichen Ernteprozesses nach dem Oberbegriff des Anspruchs 1.

Häufig werden die von einem Mähdrescher während des Erntevorgangs geernteten Nichtkornbestandteile, etwa zur Verbesserung der Bodenqualität, unmittelbar auf dem abgeernteten Territorium verteilt. Dabei ist wichtig, dass das Erntegut, hier also das Stroh, so beschaffen ist und ausgeworfen wird, dass es leicht verrottet, damit dessen Nährstoffanteile in der folgenden Vegetationsphase verfügbar sind. Die Verrottung wird von verschiedenen Faktoren beeinflusst, neben äußeren Einflüssen (unter anderem Wetter) und der Bodenzusammensetzung (unter anderem Mikroorganismen) insbesondere von der Erntegutverteilung auf dem Feldboden. Ist beispielsweise das auf dem Boden verteilte Erntegut homogen über die Arbeitsbreite des Mähdreschers verteilt, wird die Verrottung begünstigt.

Eine Systematisierung der Verteilung von Erntegut auf dem Feldboden zeigt die DE 10 2014 113 965 A1, nach der die Verteilung unter Anwendung von benutzerseitig auswählbaren Verteilstrategien vorgesehen ist. Diese grundsätzliche Art der Ansteuerung der Verteilanordnung führt zu einer hohen Reproduzierbarkeit bei der Optimierung der Erntegutverteilung auf dem Feldboden. Eine Verfeinerung dieser strategiebasierten Ansteuerung der Verteilanordnung ist Gegenstand der DE 10 2016 118 187 A1, die eine Strukturierung einer übergeordneten Verteilstrategie in untergeordnete Teilstrategien vorsieht.

Während die bekannten, steuerungstechnischen Maßnahmen eine robuste steuerungstechnische Grundstruktur für eine reproduzierbare Verteilung von Erntegut auf dem Feldboden bereitstellen, bleiben eine Reihe von Fallgestaltungen weiterhin unberücksichtigt.

Der Erfindung liegt das Problem zu Grunde, den bekannten Mähdrescher derart auszugestalten und weiterzubilden, dass die Verteilung von Erntegut auf dem Feldboden weiter optimiert wird.

Das Problem wird erfindungsgemäß mit den kennzeichnenden Merkmalen des Anspruchs 1 gelöst.

Wesentlich ist die grundsätzliche Überlegung, dass sich die Wurfcharakteristik der Verteilanordnung mit wenigen, miteinander kombinierbaren Teilstrategien einstellen lässt derart, dass eine Vielzahl wichtiger Randbedingungen wie beispielsweise einer Hanglage im Feldbestand abgedeckt ist.

Im Einzelnen wird erfindungsgemäß vorgeschlagen, dass das Fahrerassistenzsystem eingerichtet ist, die Ansteuerung der Gutverteilanordnung der Teilstrategien "Wurfrichtungskorrektur" und "neigungsabhängige Erntegutverteilung" und "Erntegutverteilung in Längsrichtung" und "Erntegutverteilung in Querrichtung" im Hinblick auf mindestens ein Optimierungskriterium hin zu optimieren.

Für das mindestens eine Optimierungskriterium sind zahlreiche Möglichkeiten denkbar, die ggf. auch benutzerdefiniert sein können. Erfindungsgemäß handelt es sich bei dem Optimierungskriterium um eine hohe Gleichmäßigkeit in der Erntegutverteilung in Querrichtung des Mähdreschers und/oder in Längsrichtung des Mähdreschers.

Der Begriff "Längsrichtung" ist vorliegend stets auf die Längsachse des Mähdreschers bezogen, in der auch die Fahrrichtung des Mähdreschers ausgerichtet ist. Die Längsrichtung des Mähdreschers stellt hier und vorzugsweise auch die Symmetrieachse für das Fahrwerk des Mähdreschers bereit.

Bei der Teilstrategie "Wurfrichtungskorrektur" geht es darum, die Wurfrichtung, hier die Horizontal-Wurfrichtung und/oder der Vertikal-Wurfrichtung, zu optimieren. Dabei ist zu berücksichtigen, dass sich die jeweilige Wurfrichtung stets aus den Vektorkomponenten einer Horizontal-Wurfrichtung und einer Vertikal-Wurfrichtung zusammensetzt.

Bei der erfindungsgemäßen Teilstrategie "neigungsabhängige Erntegutverteilung" betrifft "Neigung" eine Neigung des Feldbodens und damit des Mähdreschers im Hinblick auf die Gravitationsrichtung. Eine derartige Neigung ist stets mit einer Veränderung der Erntegutverteilung auf dem Feldboden verbunden, was von dem Fahrerassistenzsystem entsprechend zu kompensieren ist.

Die Teilstrategie "neigungsabhängige Erntegutverteilung" ist beispielsweise vorteilhaft beim Durchfahren einer Kuppe oder dem Durchfahren einer Senke, bei denen eine Anpassung der Vertikal-Wurfrichtung erforderlich ist, um das jeweilige Optimierungskriterium erfüllen zu können.

Die erfindungsgemäße Teilstrategie "Erntegutverteilung in Längsrichtung", ist auf eine reproduzierbare Erntegutverteilung in Längsrichtung des Mähdreschers zumindest durch eine Anpassung der Vertikal-Wurfrichtung und/oder der Wurfgeschwindigkeit gerichtet.

Vorteilhafte Szenarien für die Anwendung der Teilstrategie "Erntegutverteilung in Längsrichtung" sind in den Ansprüchen 3 und 4 angesprochen. Hier geht es jeweils darum, dass die Erntegutverteilung auf dem Feldboden in Längsrichtung des Mähdreschers vorbestimmten Optimierungskriterien entspricht.

Die erfindungsgemäße Teilstrategie "Erntegutverteilung in Querrichtung" betrifft eine Reproduzierbarkeit der Erntegutverteilung in Querrichtung des Mähdreschers zumindest durch eine Anpassung der Horizontal-Wurfrichtung und/oder der Wurfgeschwindigkeit.

Die weiter bevorzugten Ausgestaltungen gemäß den Ansprüchen 5 bis 10 betreffen vorteilhafte Anwendungsfälle für die Teilstrategie "Erntegutverteilung in Querrichtung".

Bei der besonders bevorzugten Ausgestaltung gemäß Anspruch 10 ist es vorgesehen, dass die Erntegutverteilungen auf dem Feldboden zweier benachbarter Fahrspuren aneinander anschließen. Damit ist auch quer zu den Fahrspuren eine gleichmäßige Erntegutverteilung auf dem Feldboden gewährleistet.

Die Umsetzung der vorschlagsgemäßen Teilstrategien kann modellbasiert und/oder sensorbasiert erfolgen. Bei der bevorzugten Ausgestaltung gemäß Anspruch 11 beispielsweise ist eine Sensoranordnung zur Erfassung der Erntegutverteilung auf der aktuellen Fahrspur und/oder auf benachbarten Fahrspuren vorgesehen, auf deren Basis das Fahrerassistenzsystem die Optimierung der Ansteuerung der Erntegutverteilung vornimmt. Hierdurch ergibt sich ein Regelsystem, das auch bei unkartierten Feldmerkmalen, beispielsweise unvorhergesehenen Hindernissen, Rechnung tragen kann.

Grundsätzlich lässt sich die Verteilbreite auf dem Feldboden durch eine Synchronisierung des Wurfrichtungsbereichs und des Wurfgeschwindigkeitsbereichs einstellen, wie in Anspruch 12 vorgeschlagen ist. Die genaue Einstellung der Verteilbreite spielt insbesondere bei der Abstimmung der Verteilung des Ernteguts auf die oben angesprochenen Nachbarfahrspuren eine wichtige Rolle.

Um sicherzustellen, dass der Bediener in sachgerechter Weise in die Verteilung des Ernteguts auf dem Feldboden eingebunden ist, betreffen die weiter bevorzugten Ausgestaltungen gemäß den Ansprüchen 13 bis 15 die Ausstattung des Fahrerassistenzsystems mit einer Ein-/Ausgabeeinrichtung, mit der sich beispielsweise individuelle Verteilwünsche gemäß Anspruch 15 benutzerseitig eingeben lassen.

Die vorschlagsgemäße Lösung ermöglicht die Dokumentation und Speicherung von Informationen, die bei nachfolgenden landwirtschaftlichen Ernteprozessen auf demselben Feld oder auf anderen Feldern nützlich sein können. Entsprechend wird gemäß Anspruch 16 vorgeschlagen, dass das Fahrerassistenzsystem entsprechende, georeferenzierte Ernteprozessdaten erzeugt und maschinenlokal oder maschinenfern ablegt.

Die vorschlagsgemäße Lösung lässt sich besonders passgenau und gleichzeitig effizient gemäß Anspruch 17 einsetzen, wenn der Mähdrescher unabhängig voneinander ansteuerbare Verteileinheiten aufweist, die vorzugsweise in Form von Radialverteilern bereitgestellt sind. Grundsätzlich ist es aber auch denkbar, dass zwei symmetrisch angesteuerte Verteileinheiten vorgesehen sind. Denkbar ist in einer besonders einfach umzusetzenden Variante schließlich die Ausstattung der Verteilanordnung mit einer einzigen, auf die Längsrichtung des Mähdreschers ausgerichteten Verteileinheit.

Im Folgenden wird die Erfindung anhand einer lediglich ein Ausführungsbeispiel darstellenden Zeichnung näher erläutert. In der Zeichnung zeigt
- Fig. 1: einen vorschlagsgemäßen Mähdrescher in einer schematischen Seitenansicht,
- Fig. 2: die Anordnung gemäß Fig. 1 in einer Draufsicht sowie entlang der Schnittlinie II-II,
- Fig. 3: die Anordnung gemäß Fig. 2 in einer Draufsicht sowie entlang der Schnittlinie III-III,
- Fig. 4: die Anordnung gemäß Fig. 1 in einer zweiten Erntesituation in einer Draufsicht sowie entlang der Schnittlinie IV-IV und
- Fig. 5: die Anordnung gemäß Fig. 1 in einer dritten Erntesituation in einer Seitenansicht a) während des Durchfahrens einer Kuppe und b) während des Durchfahrens einer Senke.

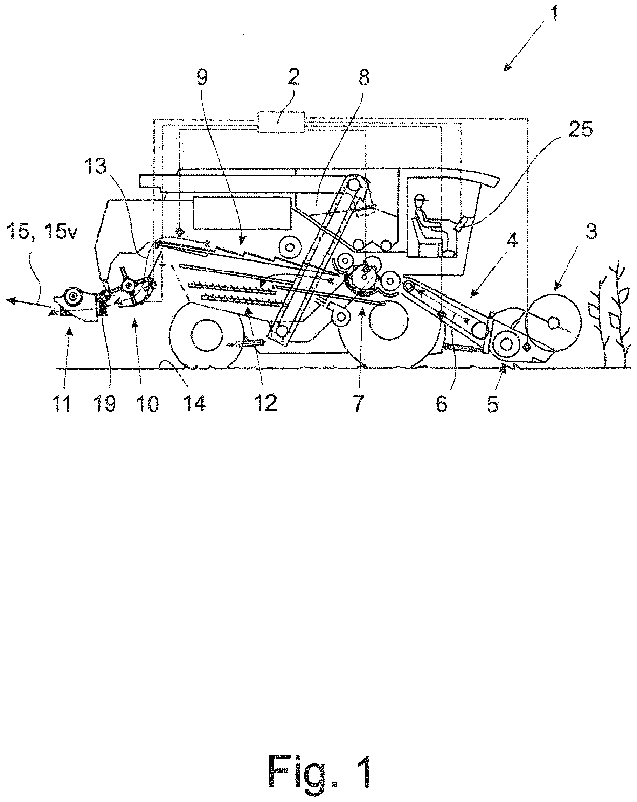

Der in Fig. 1 schematisch dargestellte Mähdrescher 1 dient der Abarbeitung eines landwirtschaftlichen Ernteprozesses. Er weist eine Mehrzahl noch zu erläuternder Arbeitsaggregate und ein Fahrerassistenzsystem 2 zur Ansteuerung zumindest eines Teils der Arbeitsaggregate auf. Als Arbeitsaggregate nimmt der Mähdrescher 1 beispielsweise ein als Getreideschneidwerk 3 ausgeführtes Vorsatzgerät auf, welches in an sich bekannter Weise mit einem Schrägförderer 4 verbunden ist. Das Querförderorgan 5 des Getreideschneidwerks 3 übergibt von diesem aufgenommenes Erntegut 6 an den Schrägförderer 4, wobei dieser das Erntegut 6 an das Dreschwerk 7 übergibt. Die im Dreschwerk abgeschiedenen Körner gelangen direkt in den Korntank 8, ein verbleibender Teilstrom aus Körnern, Kurzstroh und Spreu wird zu einer Trenneinrichtung 9 geführt, in welcher eine Trennung der Körner von dem Kurzstroh und der Spreu vorgenommen wird. Der im Wesentlichen aus Kurzstroh und Spreu bestehende Teilstrom wird nun einer Häckselvorrichtung 10 zugeführt, in der die Strohbestandteile zerkleinert und einer Gutverteilanordnung 11 zugeführt werden. Von der Trenneinrichtung 9 geht ein weiterer Teilstrom aus Körnern, Kurzstroh und Spreu ab, der bis hierhin weder dem Korntank 8 noch der Häckselvorrichtung 10 zugeführt wurde. Dieser Teilstrom durchläuft eine Reinigungseinrichtung 12, die auf die Extraktion der verbleibenden Körner und deren Überführung in den Korntank 8 gerichtet ist. Der verbleibende Teilstrom im Wesentlichen aus Kurzstroh und Spreu wird entweder der Gutverteilanordnung 11 zugeführt oder direkt auf dem Feldboden 14 abgelegt.

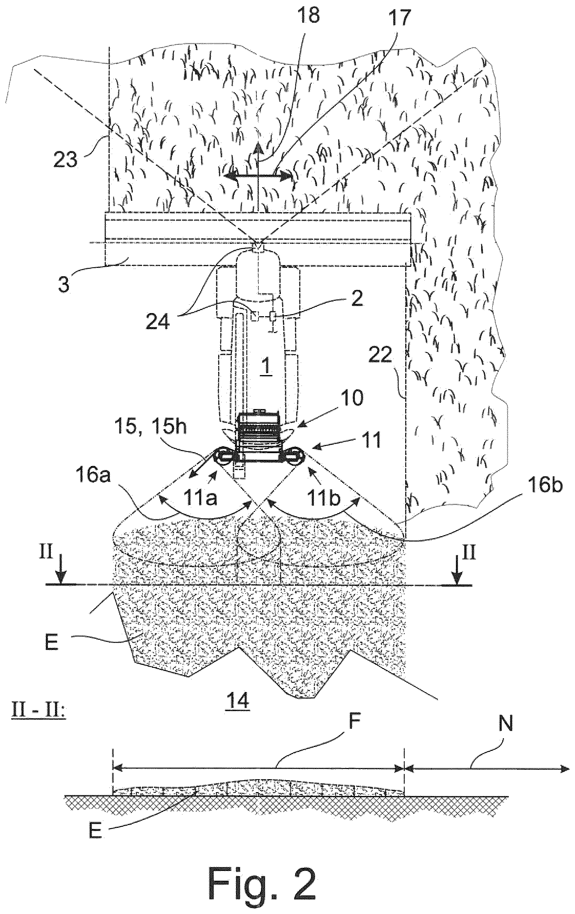

Die Häckselvorrichtung 10 und die Gutverteilanordnung 11 sind im rückwärtigen Bereich des Mähdreschers 1 angeordnet und dienen dem Verteilen von bereits gedroschenem Erntegut 13 auf dem Feldboden 14 in einstellbaren Wurfrichtungen 15. Dabei ist zu berücksichtigen, dass das Erntegut 13 je nach konstruktiver Ausgestaltung in zahlreichen Wurfrichtungen 15 abgeworfen werden kann. Hier und vorzugsweise ist es so, dass die Verteilanordnung 11 zwei Verteileinheiten 11a, 11b aufweist, die das Erntegut 13 jeweils zyklisch über einen vorbestimmten Wurfrichtungsbereich 16a, 16b abwerfen. In den Fig. 1 bis 5 ist jeweils nur eine Wurfrichtung 15 beispielhaft gezeigt. Aus einer Zusammenschau der Fig. 1 und 2 geht hervor, dass sich die jeweilige Wurfrichtung 15 aus den Vektorkomponenten einer Horizontal-Wurfrichtung 15h und einer Vertikal-Wurfrichtung 15v zusammensetzt.

Wesentlich ist nun, dass das Fahrerassistenzsystem 2 eingerichtet ist, die Ansteuerung der Gutverteilanordnung 11 mittels mindestens einer der Teilstrategien "Wurfrichtungskorrektur" und/oder "neigungsanhängige Erntegutverteilung" und/oder "Erntegutverteilung in Längsrichtung" und/oder "Erntegutverteilung in Querrichtung" im Hinblick auf mindestens ein Optimierungskriterium hin zu optimieren.

Die obigen Teilstrategien sind gewissermaßen die Methode, um das oben angesprochene, mindestens ein Optimierungskriterium zu erfüllen. Dabei ist ein beispielhaftes Optimierungskriterium vorzugsweise eine hohe Gleichmäßigkeit in der Erntegutverteilung auf dem Feldboden 14, und zwar in Querrichtung 17 des Mähdreschers 1 und/oder in Längsrichtung 18 des Mähdreschers. Eine gleichmäßige Erntegutverteilung auf dem Feldboden 14 fördert die oben angesprochene, vorteilhafte Verrottung des Ernteguts 13. Eine beispielhafte Erntegutverteilung auf dem Feldboden 14 in Querrichtung zeigt die Schnittdarstellung gemäß Fig. 2.

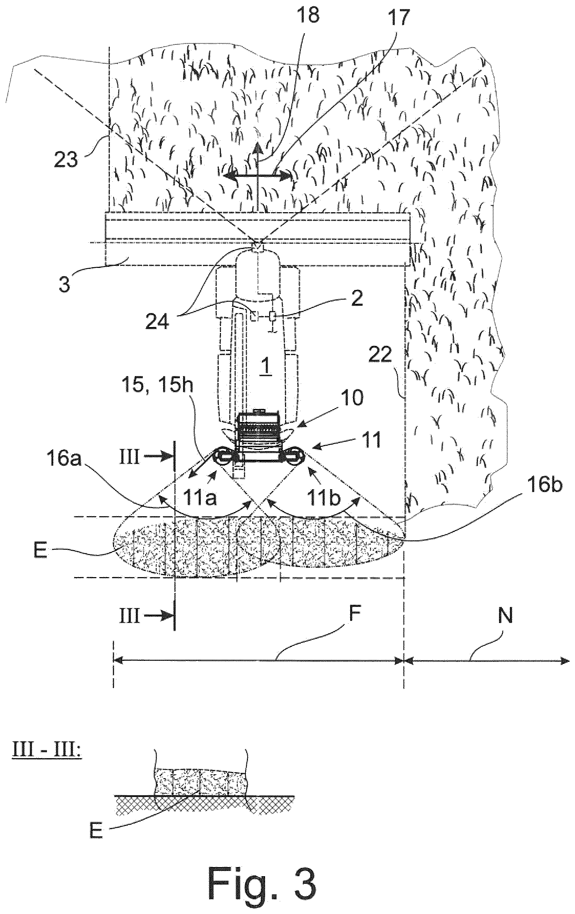

Alternativ oder zusätzlich kann es vorgesehen sein, dass ein Optimierungskriterium die Einstellung einer vorbestimmten Erntegutverteilung auf dem Feldboden 14, insbesondere einer vorbestimmten Erntegutverteilung in Längsrichtung 18 und/oder in Querrichtung 17 des Mähdreschers 1, betrifft. Je nach Folgebearbeitung des Feldes können hier unterschiedliche, vorbestimmte Erntegutverteilungen vorteilhaft sein. Eine Erntegutverteilung in Längsrichtung 18 des Mähdreschers 1 zeigt die Schnittdarstellung gemäß Fig. 3 beispielhaft.

Alternativ oder zusätzlich kann es vorgesehen sein, dass ein Optimierungskriterium die Einstellung der Erntegutverteilung E innerhalb der jeweils aktuellen Fahrspur F betrifft.

Die hier bevorzugte Teilstrategie "Wurfrichtungskorrektur" bewirkt eine Optimierung der Wurfrichtung 15 des Ernteguts 13 durch eine Anpassung der Horizontal-Wurfrichtung 15h und/oder der Vertikal-Wurfrichtung 15v.

Eine Anpassung der Horizontal-Wurfrichtung 15h ist auf besonders einfache Weise durch einstellbare Streubleche in den vorzugsweise als Radialverteiler ausgestalteten Verteileinheiten 11a, 11b möglich. Hier darf auf die deutsche Patentanmeldung DE 10 2014 113 965 A1 verwiesen werden, die auf die Anmelderin zurückgeht und deren Inhalt insoweit zum Gegenstand der vorliegenden Anmeldung gemacht wird.

Die Vertikal-Wurfrichtung 15v lässt sich auf besonders einfache Weise dadurch realisieren, dass die Verteilanordnung 11 insgesamt oder die Verteileinheiten 11a, 11b jeweils für sich um eine Schwenkachse 19 schwenkbar ist bzw. sind, die parallel zu der Querrichtung 17 des Mähdreschers 1 ausgerichtet ist.

Die Teilstrategie "neigungsabhängige Erntegutverteilung" bewirkt vorzugsweise eine Optimierung der Ansteuerung der Gutverteilanordnung 11 in Abhängigkeit von der Querneigung φ_{q} und/oder der Längsneigung φₗ des Mähdreschers 1 durch eine Anpassung der Horizontal-Wurfrichtung 15h und/oder der Vertikal-Wurfrichtung 15v und/oder der Wurfgeschwindigkeit. Die Wurfgeschwindigkeit lässt sich bei einer als Radialverteiler ausgestalteten Verteileinheit 11a, 11b umsetzen, indem die Geschwindigkeit des dortigen Wurfgebläses entsprechend variiert wird. Auch insoweit darf auf die obige Patentanmeldung DE 10 2014 113 965 A1 verwiesen werden.

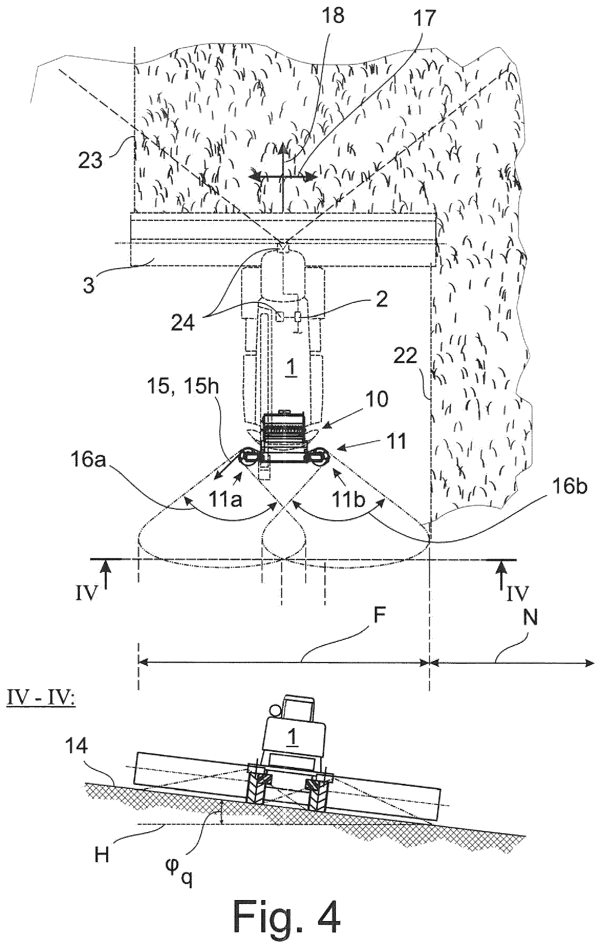

Fig. 4 zeigt die Situation, in der eine Querneigung um den Winkel φ_{q} gegenüber der Horizontalen H vorliegt. Aufgrund der Querneigung φ_{q} käme es zu einer Verlagerung der Erntegutverteilung in Querrichtung 17 des Mähdreschers 1, sofern keine Gegenmaßnahmen getroffen werden. Vorzugsweise ist es so, dass die Wurfrichtung 15 der Verteilanordnung 11 derart angepasst wird, dass die Erntegutverteilung E stets innerhalb der aktuellen Fahrspur F liegt.

Bei der in Fig. 4 gezeigten Erntesituation ist es also so, dass die Optimierung der Ansteuerung der Gutverteilanordnung 11 durch eine Anpassung der Horizontal-Wurfrichtung 15h umgesetzt wird. Die resultierende Verteilung des Ernteguts ist in Fig. 4 in gestrichelter Linie dargestellt.

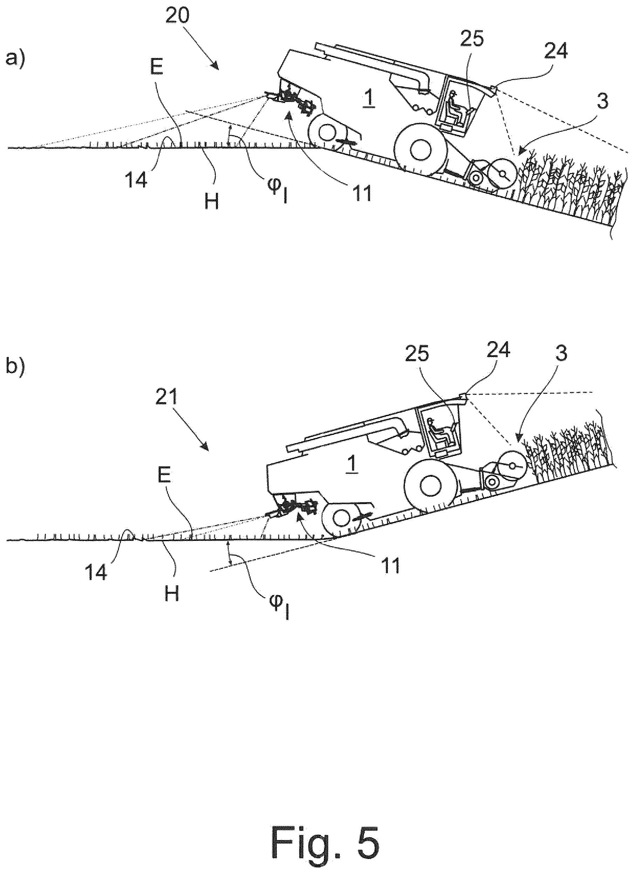

Alternativ oder zusätzlich kann es auftreten, dass sich mit dem Durchfahren einer Kuppe 20 gemäß Fig. 5a bzw. mit dem Durchfahren einer Senke 21 gemäß Fig. 5b eine Längsneigung φₗ ergibt. In besonders bevorzugter Ausgestaltung ist es nun vorgesehen, dass die Teilstrategie "neigungsabhängige Gutverteilung" eine Optimierung der Ansteuerung der Gutverteilanordnung 11 in Abhängigkeit von der Längsneigung φₗ des Mähdreschers 1 durch eine Anpassung der Vertikal-Wurfrichtung 15v bewirkt. Das Ergebnis der optimierten Ansteuerung zeigen die in gestrichelter Linie dargestellten Wurfbahnen. Beispielsweise lässt sich mit der vorschlagsgemäßen Lösung ohne weiteres erreichen, dass die Erntegutverteilung in Längsrichtung 18 gleichmäßig ist, wie in der Schnittdarstellung gemäß Fig. 3 gezeigt, obwohl der Mähdrescher 1 die Kuppe 20 gemäß Fig. 5a bzw. die Senke gemäß Fig. 5b durchfährt.

Die Teilstrategie "Gutverteilung in Längsrichtung" bewirkt die Optimierung der Ansteuerung der Gutverteilanordnung 11 im Hinblick auf die Gutverteilung in Längsrichtung 18 des Mähdreschers 1 zumindest durch eine Anpassung der Vertikal-Wurfrichtung 15v und/oder der Wurfgeschwindigkeit. Diese Teilstrategie kann Anwendung finden unabhängig davon, ob eine Längsneigung des Mähdreschers 1 vorliegt oder nicht.

Die Teilstrategie "Gutverteilung in Längsrichtung" findet auch Anwendung beim Anhalten des Mähdreschers 1, um sicherzustellen, dass auf das Anhalten des Mähdreschers 1 hin keine Haufenbildung von Erntegut stattfindet. Im Einzelnen wird hier vorgeschlagen, dass das Fahrerassistenzsystem 2 ein Anhalten des Mähdreschers 1 erfasst und darauf basierend die Erntegutverteilung E in Längsrichtung 18 des Mähdreschers 1 im Hinblick auf das mindestens eine Optimierungskriterium hin anpasst.

In besonders bevorzugter Ausgestaltung steuert das Fahrerassistenzsystem 2 die Gutverteilanordnung 11 derart an, dass die Erntegutverteilung E auf dem Feldboden 14 keine Haufenbildung von Erntegut aufweist. Dies lässt sich beispielsweise dadurch realisieren, dass während des Anhaltens die vertikale Wurfrichtung 15v nach oben ausgelenkt und die Wurfgeschwindigkeit erhöht werden, so dass das überschüssige Erntegut über den bereits abgefahrenen Feldboden 14 verteilt wird, und nicht etwa zur Haufenbildung von Erntegut führt.

Mit der Teilstrategie "Gutverteilung in Längsrichtung" ist es auch möglich, auf das Einfahren in einen Vorgewendebereich zu reagieren. Im Einzelnen wird vorgeschlagen, dass das Fahrerassistenzsystem 2 den Verlauf eines Vorgewendebereichs erfasst und darauf basierend die Ansteuerung der Gutverteilanordnung 11 im Hinblick auf das mindestens eine Optimierungskriterium hin anpasst. In besonders bevorzugter Ausgestaltung steuert das Fahrerassistenzsystem 2 die Gutverteilanordnung 11 derart an, dass der Vorgewendebereich von der Erntegutverteilung E ausgespart wird. Diese Teilstrategie kann auch bei einem schrägen Anfahren eines Vorgewendes vorteilhaft sein, dessen Vorgewendekante in einem Winkel angefahren wird, so dass beispielsweise eine hohe, oben angesprochene Gleichmäßigkeit der Erntegutverteilung auch bei einem solchen schrägen Anfahren erreichbar ist.

Eine weitere bevorzugte Teilstrategie "Gutverteilung in Querrichtung" bewirkt eine Optimierung der Ansteuerung der Gutverteilanordnung 11 im Hinblick auf die Gutverteilung in Querrichtung 17 des Mähdreschers 1 zumindest durch eine Anpassung der Horizontal-Wurfrichtung 15h und/oder der Wurfgeschwindigkeit. Hiermit lässt sich insbesondere eine gleichmäßige Gutverteilung in Querrichtung 17 des Mähdreschers 1 erreichen, wie der Schnittdarstellung gemäß Fig. 2 zu entnehmen ist.

Bei der vorschlagsgemäßen Teilstrategie "Gutverteilung in Querrichtung" spielt ein wetterbedingter Einflussfaktor, nämlich ein eventueller Seitenwind, eine besondere Rolle. Ein solcher Seitenwind kann zu einer Verlagerung der gesamten Erntegutverteilung E führen, was durch die Teilstrategie "Gutverteilung in Querrichtung" entsprechend kompensiert werden kann. Vorzugsweise ist es hier so, dass das Fahrerassistenzsystem 2 einen Seitenwind im Bereich der Gutverteilanordnung 11 ermittelt und die Gutverteilanordnung 11 in Abhängigkeit von dem ermittelten Seitenwind ansteuert. Ein solcher Seitenwind lässt sich einfach durch einen entsprechenden Windsensor ermitteln.

Die Teilstrategie "Gutverteilung in Querrichtung" ist in einer weiteren, bevorzugten Ausgestaltung so ausgelegt, dass das Fahrerassistenzsystem 2 die Beschaffenheit einer Nachbarfahrspur N ermittelt und in Abhängigkeit von der Beschaffenheit der Nachbarfahrspur N die Gutverteilanordnung 11 ansteuert. Dabei kann die Ermittlung ergeben, dass die Nachbarfahrspur N in Wirklichkeit eine Feldgrenze ist. Die Nachbarfahrspur N ist in der Zeichnung im Sinne einer übersichtlichen Darstellung verkleinert gezeigt.

In besonders bevorzugter Ausgestaltung ist es nun so, dass das Fahrerassistenzsystem 2 für den Fall, dass die Beschaffenheit der Nachbarfahrspur N die Beschaffenheit eines noch nicht abgeernteten Feldbestands oder einer Feldgrenze ist, die Nachbarfahrspur N von der Erntegutverteilung E auf dem Feldboden ausspart. Damit wird sichergestellt, dass kein Erntegut 13 in Bereiche verteilt wird, in denen diese Verteilung sogar unvorteilhaft ist.

Die Ermittlung der Beschaffenheit der Nachbarfahrspur N lässt sich beispielsweise sensorisch mittels einer Kamera o.dgl. erfassen. Denkbar ist aber auch, dass hierfür in einer Datenbank eventuell vorliegende Kartierungsdaten genutzt werden.

Für den Fall, dass die Beschaffenheit der Nachbarfahrspur N die Beschaffenheit eines abgeernteten Stoppelbereichs ist, kann die Verteilung von Erntegut ohne weiteres auf die Nachbarfahrspur N ausgedehnt werden. Beispielsweise kann hier eine definierte Überlappung zwischen den Fahrspuren F, N vorgesehen sein, so dass auch der Bereich zwischen den Fahrspuren F, N sicher mit Erntegut belegt ist.

Eine andere Art der Optimierung besteht darin, dass das Fahrerassistenzsystem 2 eine der jeweils aktuellen Fahrspur F zugeordnete Bestandskante 22 oder die der jeweils aktuellen Fahrspur F zugeordneten Bestandskanten 22, 23 ermittelt und einen vorbestimmten Querabstand zu der Bestandskante 22 bzw. den Bestandskanten 22, 23 einhält. Dies ist eine Alternative zu der oben angesprochenen Überlappung zwischen den Fahrspuren F, N.

In einer weiter bevorzugten Ausgestaltung ermittelt das Fahrerassistenzsystem 2 den Verlauf einer Nachbarfahrspur N, wobei in Abhängigkeit von dem ermittelten Verlauf der Nachbarfahrspur N die Gutverteilanordnung 11 mittels des Fahrerassistenzsystems 2 angesteuert wird. In besonders bevorzugter Ausgestaltung ist es dann so, dass das Fahrerassistenzsystem 2 die Gutverteilanordnung 11 derart ansteuert, dass die Erntegutverteilungen E auf dem Feldboden 14 zweier benachbarter Fahrspuren F, N aneinander anschließen.

Wie oben angesprochen, ist der Mähdrescher 1 vorzugsweise mit einer Sensoranordnung 24 zur Erfassung der Erntegutverteilung E auf der aktuellen Fahrspur F und/oder auf benachbarten Fahrspuren N ausgestattet, auf deren Basis das Fahrerassistenzsystem 2 die Optimierung der Ansteuerung der Gutverteilanordnung 11 vornimmt. Diese Sensoranordnung 24 kann auch zur Erfassung der in Fig. 5 gezeigten Längsneigung φₗ, der in Fig. 4 gezeigten Querneigung φ_{q}, der in den Fig. 2 bis 4 gezeigten Bestandskanten 22, 23 o. dgl. Anwendung finden. Die Sensoranordnung 24 kann mindestens einen Laser-Anstands-sensor, eine Kamera, o.dgl. aufweisen.

Die oben erläuterten Teilstrategien können zumindest zum Teil darauf zurückgehen, dass eine vorbestimmte Verteilbreite der Erntegutverteilung E in Querrichtung 17 des Mähdreschers 1 eingehalten wird. Hier und vorzugsweise ist es entsprechend so, dass die Verteilbreite auf dem Feldboden 14 durch eine Synchronisierung des Wurfrichtungsbereichs mit dem Wurfgeschwindigkeitsbereich einstellbar ist.

In Fig. 1 ist angedeutet, dass das Fahrerassistenzsystem 2 eine Mensch-Maschine-Schnittstelle, hier und vorzugsweise eine Ein-/Ausgabeeinrichtung 25, aufweist, wobei Betriebsparameter, hier und vorzugsweise die mindestens eine Teilstrategie oder damit im Zusammenhang stehende Strategieparameter, über die Ein-/Ausgabeeinrichtung 25 benutzerseitig eingebbar sind. Damit lässt sich die vorschlagsgemäße Lösung mit hohem Bedienkomfort einstellen.

Beispielsweise kann es vorgesehen sein, dass die Schneidwerksbreite des Getreideschneidwerks 3 über die Ein-/Ausgabeeinrichtung 25 eingebbar ist, wobei das Fahrerassistenzsystem 2 die Gutverteilanordnung 11 in Abhängigkeit von der eingegebenen Schneidwerksbreite ansteuert.

Ganz allgemein kann es auch vorgesehen sein, dass individuelle, bedienerseitige Verteilwünsche über die Ein-/Ausgabeeinrichtung 25 eingebbar sind, wobei das Fahrerassistenzsystem 2 wiederum die Gutverteilanordnung 11 in Abhängigkeit von diesen Verteilwünschen ansteuert.

Die vorschlagsgemäße Lösung kann zusätzlich für die Kartierung des jeweiligen Feldes genutzt werden. Hierfür wird vorgeschlagen, dass das Fahrerassistenzsystem 2 die Ansteuerung der Verteilanordnung 11 und/oder die Erntegutverteilung E auf dem Feldboden 14 mit Positionsdaten referenziert und als georeferenzierte Ernteprozessdaten in einer maschinenlokalen Datenbank und/oder in einer maschinenfernen Datenbank ablegt. Hiermit ist es möglich, bei nachfolgenden Bearbeitungsschritten auf die vorgenommene Erntegutverteilung E zurückzugreifen, beispielsweise, um die Humusbildung bis zur nächsten Bearbeitung abzuschätzen.

Wie weiter oben angesprochen, kann die Verteilanordnung 11 eine einzige Verteileinheit 11a umfassen. Hier und vorzugsweise ist es allerdings so, dass die Verteilanordnung 11 zwei Verteileinheiten 11a, 11b aufweist, wobei die beiden Verteileinheiten 11a, 11b bezogen auf die Längsrichtung 18 des Mähdreschers 1 auf gegenüberliegenden Seiten angeordnet sind, wobei die beiden Verteileinheiten 11a, 11b mittels des Fahrerassistenzsystems 2 unabhängig voneinander ansteuerbar sind. Dies ergibt im Hinblick auf die vorschlagsgemäßen Teilstrategien die größtmögliche Flexibilität.

### Bezugszeichenliste

- 1: Mähdrescher
- 2: Fahrerassistenzsystem
- 3: Getreideschneidwerk
- 4: Schrägförderer
- 5: Querförderorgan
- 6: Erntegut
- 7: Dreschwerk
- 8: Korntank
- 9: Trenneinrichtung
- 10: Häckselvorrichtung
- 11: Gutverteilanordnung
- 11a,b: Verteileinheiten
- 12: Reinigungseinrichtung
- 13: Gedroschenes Erntegut
- 14: Feldboden
- 15: Wurfrichtungen
- 15h: Horizontal-Wurfrichtung
- 15v: Vertikal-Wurfrichtung
- 16a, b: Wurfrichtungsbereiche
- 17: Querrichtung
- 18: Längsrichtung
- 19: Schwenkachse
- 20: Kuppe
- 21: Senke
- 22,23: Bestandskanten
- 24: Sensoranordnung
- 25: Ein-/Ausgabeeinrichtung

## Patentansprüche

1. Mähdrescher zur Abarbeitung eines landwirtschaftlichen Ernteprozesses mit einer Mehrzahl von Arbeitsaggregaten und einem Fahrerassistenzsystem (2) zur Ansteuerung zumindest eines Teils der Arbeitsaggregate, wobei der Mähdrescher (1) als Arbeitsaggregate eine Häckselvorrichtung (10) zum Zerkleinern von Erntegut (6) und eine der Häckselvorrichtung (10) nachgeschaltete Gutverteilanordnung (11) im rückwärtigen Bereich des Mähdreschers (1) zum Verteilen von Erntegut (6) auf dem Feldboden (14) in einstellbaren Wurfrichtungen (15) aufweist, wobei sich die jeweilige Wurfrichtung (15) aus den Vektorkomponenten einer Horizontal-Wurfrichtung (15h) und einer Vertikal-Wurfrichtung (15v) zusammensetzt,
**dadurch gekennzeichnet,**
**dass** das Fahrerassistenzsystem (2) eingerichtet ist, die Wurfcharakteristik der Gutverteilanordung (11) durch Kombination von Teilstrategien zu optimieren, wobei die Ansteuerung der Gutverteilanordnung (11) durch Kombination der Teilstrategien "Wurfrichtungskorrektur" und "neigungsabhängige Gutverteilung" und "Gutverteilung in Längsrichtung" und "Gutverteilung in Querrichtung" im Hinblick auf mindestens ein Optimierungskriterium optimiert wird, wobei ein Optimierungskriterium eine hohe Gleichmäßigkeit in der Gutverteilung auf dem Feldboden (14) in Querrichtung (17) und in Längsrichtung des Mähdreschers (1) betrifft, und/oder, dass ein Optimierungskriterium die Einstellung der Erntegutverteilung innerhalb einer jeweils aktuellen Fahrspur (F) betrifft, wobei die Teilstrategie "Wurfrichtungskorrektur" eine Optimierung der Wurfrichtung des Ernteguts (6) durch eine Anpassung der Horizontal-Wurfrichtung (15h) und/oder der Vertikal-Wurfrichtung (15v) bewirkt, wobei die Teilstrategie "neigungsabhängige Gutverteilung" eine Optimierung der Ansteuerung der Gutverteilanordnung (11) in Abhängigkeit von der Querneigung und/oder der Längsneigung des Mähdreschers (1) durch eine Anpassung der Horizontal-Wurfrichtung (15h) und/oder der Vertikal-Wurfrichtung (15v) und/oder der Wurfgeschwindigkeit bewirkt, wobei die Teilstrategie "Gutverteilung in Längsrichtung" eine Optimierung der Ansteuerung der Gutverteilanordnung (11) im Hinblick auf die Gutverteilung in Längsrichtung (18) des Mähdreschers (1) zumindest durch eine Anpassung der Vertikal-Wurfrichtung und/oder der Wurfgeschwindigkeit bewirkt, wobei die Teilstrategie "Gutverteilung in Querrichtung" eine Optimierung der Ansteuerung der Gutverteilanordnung (11) im Hinblick auf die Gutverteilung in Querrichtung (17) des Mähdreschers (1) zumindest durch eine Anpassung der Horizontal-Wurfrichtung und/oder der Wurfgeschwindigkeit bewirkt.

2. Mähdrescher nach einem der vorhergehenden Ansprüche, **dadurch gekennzeichnet**, das Fahrerassistenzsystem (2) das Durchfahren einer Kuppe (20) erfasst und zumindest die vertikale Wurfrichtung auf das Optimierungskriterium hin anpasst, und/oder, das Fahrerassistenzsystem das Durchfahren einer Senke (21) erfasst und zumindest die vertikale Wurfrichtung auf das mindestens eine Optimierungskriterium hin anpasst.

3. Mähdrescher nach einem der vorhergehenden Ansprüche, **dadurch gekennzeichnet, dass** das Fahrerassistenzsystem (2) ein Anhalten des Mähdreschers (1) erfasst und darauf basierend die Gutverteilung in Längsrichtung (18) des Mähdreschers (1) im Hinblick auf das mindestens eine Optimierungskriterium hin anpasst, vorzugsweise, dass das Fahrerassistenzsystem die Gutverteilanordnung (11) derart ansteuert, dass die Gutverteilung auf dem Feldboden (14) keine Haufenbildung von Erntegut (6) aufweist.

4. Mähdrescher nach einem der vorhergehenden Ansprüche, **dadurch gekennzeichnet, dass** das Fahrerassistenzsystem (2) den Verlauf eines Vorgewendebereichs erfasst und darauf basierend die Ansteuerung der Gutverteilanordnung (11) im Hinblick auf das mindestens eine Optimierungskriterium hin anpasst, vorzugsweise, dass das Fahrerassistenzsystem (2) den Vorgewendebereich von der Erntegutverteilung (E) ausspart.

5. Mähdrescher nach einem der vorhergehenden Ansprüche, **dadurch gekennzeichnet, dass** das Fahrerassistenzsystem (2) einen Seitenwind im Bereich der Gutverteilanordnung (11) ermittelt und die Gutverteilanordnung (11) in Abhängigkeit von dem ermittelten Seitenwind ansteuert.

6. Mähdrescher nach einem der vorhergehenden Ansprüche, **dadurch gekennzeichnet, dass** das Fahrerassistenzsystem (2) die Beschaffenheit einer Nachbarfahrspur (N) ermittelt und in Abhängigkeit von der Beschaffenheit der Nachbarfahrspur (N) die Gutverteilanordnung (11) ansteuert.

7. Mähdrescher nach einem der vorhergehenden Ansprüche, **dadurch gekennzeichnet, dass** das Fahrerassistenzsystem (2) für den Fall, dass die Beschaffenheit der Nachbarfahrspur (N) die Beschaffenheit eines noch nicht abgeernteten Feldbestands oder einer Feldgrenze ist, die Nachbarfahrspur (N) von der Gutverteilung auf dem Feldboden (14) ausspart.

8. Mähdrescher nach einem der vorhergehenden Ansprüche, **dadurch gekennzeichnet, dass** das Fahrerassistenzsystem (2) für den Fall, dass die Beschaffenheit der Nachbarfahrspur (N) die Beschaffenheit eines abgeernteten Stoppelbereichs ist, die Gutverteilung auf dem Feldboden (14) auf die Nachbarfahrspur (N) ausdehnt.

9. Mähdrescher nach einem der vorhergehenden Ansprüche, **dadurch gekennzeichnet, dass** das Fahrerassistenzsystem (2) eine der jeweils aktuellen Fahrspur (F) zugeordnete Bestandskante (22) oder die der jeweils aktuellen Fahrspur zugeordneten Bestandskanten (22, 23) ermittelt und einen vorbestimmten Querabstand zu der Bestandskante (22) bzw. den Bestandskanten (22, 23) einhält.

10. Mähdrescher nach einem der vorhergehenden Ansprüche, **dadurch gekennzeichnet, dass** das Fahrerassistenzsystem (2) den Verlauf einer Nachbarfahrspur (N) ermittelt und in Abhängigkeit von dem ermittelten Verlauf der Nachbarfahrspur (N) die Gutverteilanordnung (11) ansteuert, vorzugsweise, dass das Fahrerassistenzsystem (2) die Gutverteilanordnung (11) derart ansteuert, dass die Erntegutverteilung (E) auf dem Feldboden (14) zweier benachbarter Fahrspuren (F) aneinander anschließen.

11. Mähdrescher nach einem der vorhergehenden Ansprüche, **dadurch gekennzeichnet, dass** eine Sensoranordnung (24) zur Erfassung der Erntegutverteilung (E) auf der aktuellen Fahrspur (F) und/oder auf benachbarten Fahrspuren (F) vorgesehen ist, auf deren Basis das Fahrerassistenzsystem (2) die Optimierung der Ansteuerung der Gutverteilanordnung (11) vornimmt.

12. Mähdrescher nach einem der vorhergehenden Ansprüche, **dadurch gekennzeichnet, dass** die Verteilbreite auf dem Feldboden (14) durch eine Synchronisierung des Wurfrichtungsbereichs (16a, 16b) mit dem Wurfgeschwindigkeitsbereich einstellbar ist.

13. Mähdrescher nach einem der vorhergehenden Ansprüche, **dadurch gekennzeichnet, dass** das Fahrerassistenzsystem (2) eine Mensch-Maschine-Schnittstelle, insbesondere eine Ein-/Ausgabeeinrichtung (25) aufweist und dass Betriebsparameter, vorzugsweise die mindestens eine Teilstrategie oder damit in Zusammenhang stehende Strategieparameter, über die Ein-/Ausgabeeinrichtung (25) benutzerseitig eingebbar sind.

14. Mähdrescher nach einem der vorhergehenden Ansprüche, **dadurch gekennzeichnet, dass** der Mähdrescher (1) ein Getreideschneidwerk (3) mit einer Schneidwerksbreite aufweist, dass die Schneidwerksbreite über die Ein-/Ausgabeeinrichtung (25) eingebbar ist und dass das Fahrerassistenzsystem (2) die Gutverteilanordnung (11) in Abhängigkeit von der Schneidwerksbreite ansteuert.

15. Mähdrescher nach einem der vorhergehenden Ansprüche, **dadurch gekennzeichnet, dass** individuelle, bedienerseitige Verteilwünsche über die Ein-/Ausgabeeinrichtung (25) eingebbar sind und dass das Fahrerassistenzsystem (2) die Gutverteilanordnung (11) in Abhängigkeit von den Verteilwünschen ansteuert.

16. Mähdrescher nach einem der vorhergehenden Ansprüche, **dadurch gekennzeichnet, dass** das Fahrerassistenzsystem (2) die Ansteuerung der Verteilanordnung (11) und/oder die Erntegutverteilung (E) auf dem Feldboden (14) mit Positionsdaten referenziert und als georeferenzierte Ernteprozessdaten in einer maschinenlokalen Datenbank und/oder in einer maschinenfernen Datenbank ablegt.

17. Mähdrescher nach einem der vorhergehenden Ansprüche, **dadurch gekennzeichnet, dass** die Verteilanordnung (11) zwei Verteileinheiten (11a, 11b), insbesondere zwei Radialverteiler, aufweist, dass die beiden Verteileinheiten (11a, 11b) bezogen auf die Längsrichtung (18) des Mähdreschers (1) auf gegenüberliegenden Seiten angeordnet sind und dass die beiden Verteileinheiten mittels des Fahrerassistenzsystems (2) unabhängig voneinander ansteuerbar sind.

## Claims

1. Combine harvester for carrying out an agricultural harvesting process, comprising a plurality of working units and a driver assistance system (2) for controlling at least some of the working units, wherein the combine harvester (1) comprises as working units a chaff cutter (10) for comminuting harvested produce (6) and, in the rear area of the combine harvester (1) downstream of the chaff cutter (10), a produce distributing arrangement (11) for distributing harvested produce (6) on the field floor (14) in adjustable throwing directions (15), the respective throwing direction (15) being made up of the vector components of a horizontal throwing direction (15h) and a vertical throwing direction (15v),
**characterized**
**in that** the driver assistance system (2) is adapted to optimize the throwing characteristic of the produce distributing arrangement (11) by combining substrategies, wherein the control of the produce distributing arrangement (11) is optimized with respect to at least one optimization criterion by combining the substrategies "throwing direction correction" and "inclination-dependent produce distribution" and "produce distribution in the longitudinal direction" and "produce distribution in the transverse direction", wherein one optimization criterion concerns a high degree of uniformity in the produce distribution on the field floor (14) in the transverse direction (17) and in the longitudinal direction of the combine harvester (1), and/or in that one optimization criterion concerns the adjustment of the harvested produce distribution within a respective current driving track (F), wherein the "throwing direction correction" substrategy brings about an optimization of the throwing direction of the harvested produce (6) through an adaptation of the horizontal throwing direction (15h) and/or of the vertical throwing direction (15v), wherein the "inclination-dependent produce distribution" substrategy brings about an optimization of the control of the produce distributing arrangement (11) in dependence on the transverse inclination and/or the longitudinal inclination of the combine harvester (1) through an adaptation of the horizontal throwing direction (15h) and/or of the vertical throwing direction (15v) and/or of the throwing speed, wherein the "produce distribution in the longitudinal direction" substrategy brings about an optimization of the control of the produce distributing arrangement (11) with respect to the produce distribution in the longitudinal direction (18) of the combine harvester (1) at least through an adaptation of the vertical throwing direction and/or of the throwing speed, and wherein the "produce distribution in the transverse direction" substrategy brings about an optimization of the control of the produce distributing arrangement (11) with respect to the produce distribution in the transverse direction (17) of the combine harvester (1) at least through an adaptation of the horizontal throwing direction and/or of the throwing speed.

2. Combine harvester according to one of the preceding claims, **characterized in that** the driver assistance system (2) detects driving over a hump (20) and adapts at least the vertical throwing direction to the optimization criterion, and/or the driver assistance system detects driving over a dip (21) and adapts at least the vertical throwing direction to the at least one optimization criterion.

3. Combine harvester according to one of the preceding claims, **characterized in that** the driver assistance system (2) detects stopping of the combine harvester (1) and, on this basis, adapts the produce distribution in the longitudinal direction (18) of the combine harvester (1) with respect to the at least one optimization criterion, preferably **in that** the driver assistance system controls the produce distributing arrangement (11) in such a way that the produce distribution on the field floor (14) has no accumulation of harvested produce (6).

4. Combine harvester according to one of the preceding claims, **characterized in that** the driver assistance system (2) detects the course of a headland area and, on this basis, adapts the control of the produce distributing arrangement (11) with respect to the at least one optimization criterion, preferably **in that** the driver assistance system (2) excludes the headland area from the harvested produce distribution (E).

5. Combine harvester according to one of the preceding claims, **characterized in that** the driver assistance system (2) determines a crosswind in the area of the produce distributing arrangement (11) and controls the produce distributing arrangement (11) in dependence on the determined crosswind.

6. Combine harvester according to one of the preceding claims, **characterized in that** the driver assistance system (2) determines the state of a neighbouring driving track (N) and controls the produce distributing arrangement (11) in dependence on the state of the neighbouring driving track (N).

7. Combine harvester according to one of the preceding claims, **characterized in that**, in the event that the state of the neighbouring driving track (N) is the state of a crop stand which has not yet been harvested or a field boundary, the driver assistance system (2) excludes the neighbouring driving track (N) from the produce distribution on the field floor (14).

8. Combine harvester according to one of the preceding claims, **characterized in that**, in the event that the state of the neighbouring driving track (N) is the state of a harvested stubble area, the driver assistance system (2) expands the produce distribution on the field floor (14) to the neighbouring driving track (N).

9. Combine harvester according to one of the preceding claims, **characterized in that** the driver assistance system (2) determines a crop stand edge (22) associated with the respective current driving track (F) or determines the crop stand edges (22, 23) associated with the respective current driving track and maintains a predetermined transverse distance from the crop stand edge (22) or the crop stand edges (22, 23).

10. Combine harvester according to one of the preceding claims, **characterized in that** the driver assistance system (2) determines the course of a neighbouring driving track (N) and controls the produce distributing arrangement (11) in dependence on the determined course of the neighbouring driving track (N), preferably **in that** the driver assistance system (2) controls the produce distributing arrangement (11) in such a way that the harvested produce distribution (E) on the field floor (14) of two adjacent driving tracks (F) adjoin one another.

11. Combine harvester according to one of the preceding claims, **characterized in that** a sensor arrangement (24) is provided for detecting the harvested produce distribution (E) on the current driving track (F) and/or on adjacent driving tracks (F), on the basis of which the driver assistance system (2) performs the optimization of the control of the produce distributing arrangement (11).

12. Combine harvester according to one of the preceding claims, **characterized in that** the distribution width on the field floor (14) is adjustable by synchronizing the throwing direction range (16a, 16b) with the throwing speed range.

13. Combine harvester according to one of the preceding claims, **characterized in that** the driver assistance system (2) has a human-machine interface, in particular an input/output device (25), and **in that** operating parameters, preferably the at least one substrategy or related strategy parameters, can be entered by a user via the input/output device (25).

14. Combine harvester according to one of the preceding claims, **characterized in that** the combine harvester (1) has a grain header (3) with a header width, **in that** the header width can be entered via the input/output device (25) and **in that** the driver assistance system (2) controls the produce distributing arrangement (11) in dependence on the header width.

15. Combine harvester according to one of the preceding claims, **characterized in that** individual distribution wishes of the operator can be entered via the input/output device (25) and **in that** the driver assistance system (2) controls the produce distributing arrangement (11) in dependence on the distribution wishes.

16. Combine harvester according to one of the preceding claims, **characterized in that** the driver assistance system (2) references the control of the distributing arrangement (11) and/or the harvested produce distribution (E) on the field floor (14) with position data and stores them as georeferenced harvesting process data in a machine-local database and/or in a machine-remote database.

17. Combine harvester according to one of the preceding claims, **characterized in that** the distributing arrangement (11) has two distributing units (11a, 11b), in particular two radial distributors, **in that** the two distributing units (11a, 11b) are arranged on opposite sides with reference to the longitudinal direction (18) of the combine harvester (1) and **in that** the two distributing units are controllable independently of one another by means of the driver assistance system (2).

## Revendications

1. Moissonneuse-batteuse pour la mise en œuvre d'un processus de récolte agricole, avec une multitude d'unités de travail et un système d'assistance au conducteur (2) pour piloter au moins une partie des unités de travail, la moissonneuse-batteuse (1) comportant, en tant qu'unités de travail, un dispositif de hachage (10) destiné à broyer le produit de récolte (6) et un ensemble de distribution de produit (11) installé en aval du dispositif de hachage (10) dans la zone arrière de la moissonneuse-batteuse (1) pour distribuer le produit de récolte (6) sur le sol du champ (14) dans des directions de projection (15) réglables, la direction de projection (15) respective étant composée des composantes vectorielles d'une direction de projection horizontale (15h) et d'une direction de projection verticale (15v),
**caractérisée en ce**
**que** le système d'assistance au conducteur (2) est mis au point pour optimiser la caractéristique de projection de l'ensemble de distribution de produit (11) par combinaison de stratégies partielles, le pilotage de l'ensemble de distribution de produit (11) étant optimisé par la combinaison des stratégies partielles « correction de direction de projection » et « distribution de récolte dépendante de l'inclinaison » et « distribution de récolte dans le sens longitudinal » et « distribution de récolte dans le sens transversal » en ce qui concerne au moins un critère d'optimisation, un critère d'optimisation concernant un degré élevé d'uniformité de la distribution de produit sur le sol du champ (14) dans le sens transversal (17) et dans le sens longitudinal de la moissonneuse-batteuse (1), et/ou un critère d'optimisation concernant le réglage de la distribution de produit de récolte dans une voie (F) respectivement courante, la stratégie partielle « correction de direction de projection » entraînant une optimisation de la direction de projection du produit de récolte (6) par une adaptation de la direction de projection horizontale (15h) et/ou de la direction de projection verticale (15v), la stratégie partielle « distribution de produit dépendante de l'inclinaison » entraînant une optimisation du pilotage de l'ensemble de distribution de produit (11) en fonction de l'inclinaison transversale et/ou de l'inclinaison longitudinale de la moissonneuse-batteuse (1) par une adaptation de la direction de projection horizontale (15h) et/ou de la direction de projection verticale (15v) et/ou de la vitesse de projection, la stratégie partielle « distribution de produit dans le sens longitudinal » entraînant une optimisation du pilotage de l'ensemble de distribution de produit (11) en ce qui concerne la distribution de produit dans le sens longitudinal (18) de la moissonneuse-batteuse (1) au moins par une adaptation de la direction de projection verticale et/ou de la vitesse de projection, la stratégie partielle « distribution de produit dans le sens transversal » entraînant une optimisation du pilotage de l'ensemble de distribution de produit (11) en ce qui concerne la distribution de produit dans le sens transversal (17) de la moissonneuse-batteuse (1) au moins par une adaptation de la direction de projection horizontale et/ou de la vitesse de projection.

2. Moissonneuse-batteuse selon l'une des revendications précédentes, **caractérisée en ce que** le système d'assistance au conducteur (2) détecte le passage d'une butte (20) et adapte au moins la direction de projection verticale au critère d'optimisation et/ou le système d'assistance au conducteur détecte le passage d'une cuvette (21) et adapte au moins la direction de projection verticale à l'au moins un critère d'optimisation.

3. Moissonneuse-batteuse selon l'une des revendications précédentes, **caractérisée en ce que** le système d'assistance au conducteur (2) détecte un arrêt de la moissonneuse-batteuse (1) et adapte sur cette base la distribution de produit dans le sens longitudinal (18) de la moissonneuse-batteuse (1) en ce qui concerne l'au moins un critère d'optimisation, de préférence que le système d'assistance au conducteur pilote l'ensemble de distribution de produit (11) de telle manière que la distribution de produit sur le sol du champ (14) ne présente aucune formation de tas de produit de récolte (6).

4. Moissonneuse-batteuse selon l'une des revendications précédentes, **caractérisée en ce que** le système d'assistance au conducteur (2) détecte le tracé d'une zone de tournière et adapte sur cette base le pilotage de l'ensemble de distribution de produit (11) en ce qui concerne l'au moins un critère d'optimisation, de préférence que le système d'assistance au conducteur (2) épargne la zone de tournière de la distribution de récolte (E).

5. Moissonneuse-batteuse selon l'une des revendications précédentes, **caractérisée en ce que** le système d'assistance au conducteur (2) détermine un vent transversal dans la zone de l'ensemble de distribution de produit (11) et pilote l'ensemble de distribution de produit (11) en fonction du vent latéral déterminé.

6. Moissonneuse-batteuse selon l'une des revendications précédentes, **caractérisée en ce que** le système d'assistance au conducteur (2) détermine la nature d'une voie voisine (N) et pilote l'ensemble de distribution de produit (11) en fonction de la nature de la voie voisine (N).

7. Moissonneuse-batteuse selon l'une des revendications précédentes, **caractérisée en ce que** le système d'assistance au conducteur (2), dans le cas où la nature de la voie voisine (N) est la nature d'un produit de champ non récolté encore ou d'une limite de champ, épargne la voie voisine (N) de la distribution de produit sur le sol du champ (14).

8. Moissonneuse-batteuse selon l'une des revendications précédentes, **caractérisée en ce que** le système d'assistance au conducteur (2) élargit la distribution de produit sur le sol du champ (14) à la voie voisine (N) dans le cas où la nature de la voie voisine (N) est celle d'une zone de chaume récoltée.

9. Moissonneuse-batteuse selon l'une des revendications précédentes, **caractérisée en ce que** le système d'assistance au conducteur (2) détermine un bord existant (22) associé à la voie (F) respectivement courante ou les bords existants (22, 23) associés à la voie respectivement courante et maintient une distance transversale prédéterminée par rapport au bord existant (22) ou aux bords existants (22, 23).

10. Moissonneuse-batteuse selon l'une des revendications précédentes, **caractérisée en ce que** le système d'assistance au conducteur (2) détermine le tracé d'une voie voisine (N) et pilote l'ensemble de distribution de produit (11) en fonction du tracé déterminé de la voie voisine (N), de préférence que le système d'assistance au conducteur (2) pilote l'ensemble de distribution de produit (11) de telle manière que la distribution de récolte (E) sur le sol du champ (14) de deux voies (F) adjacentes se rejoignent.

11. Moissonneuse-batteuse selon l'une des revendications précédentes, **caractérisée en ce qu'**un ensemble de détection (24) est prévu pour détecter la distribution de récolte (E) sur la voie (F) courante et/ou sur des voies (F) adjacentes, sur la base de laquelle le système d'assistance au conducteur (2) optimise le pilotage de l'ensemble de distribution de produit (11).

12. Moissonneuse-batteuse selon l'une des revendications précédentes, **caractérisée en ce que** la largeur de distribution sur le sol du champ (14) peut être réglée par une synchronisation de la plage de direction de projection (16a, 16b) avec la plage de vitesse de projection.

13. Moissonneuse-batteuse selon l'une des revendications précédentes, **caractérisée en ce que** le système d'assistance au conducteur (2) comporte une interface homme-machine, en particulier un dispositif d'entrée/sortie (25), et que des paramètres de fonctionnement, de préférence l'au moins une stratégie partielle ou les paramètres de stratégie qui lui sont associés, peuvent être entrés par l'utilisateur par le dispositif d'entrée/sortie (25).

14. Moissonneuse-batteuse selon l'une des revendications précédentes, **caractérisée en ce que** la moissonneuse-batteuse (1) comporte une barre de coupe à grains (3) avec une largeur de barre de coupe, que la largeur de barre de coupe peut être entrée par le dispositif d'entrée/sortie (25) et que le système d'assistance au conducteur (2) pilote l'ensemble de distribution de produit (11) en fonction de la largeur de barre de coupe.

15. Moissonneuse-batteuse selon l'une des revendications précédentes, **caractérisée en ce que** des demandes de distribution individuelles côté opérateur peuvent être entrées par le dispositif d'entrée/sortie (25) et que le système d'assistance au conducteur (2) pilote l'ensemble de distribution de produit (11) en fonction des demandes de distribution.

16. Moissonneuse-batteuse selon l'une des revendications précédentes, **caractérisée en ce que** le système d'assistance au conducteur (2) référence avec des données de position le pilotage de l'ensemble de distribution (11) et/ou la distribution de récolte (E) sur le sol du champ (14) et les mémorise en tant que données de processus de récolte géoréférencées dans une base de données locale de la machine et/ou dans une base de données distante de la machine.

17. Moissonneuse-batteuse selon l'une des revendications précédentes, **caractérisée en ce que** l'ensemble de distribution (11) comporte deux unités de distribution (11a, 11b), en particulier deux distributeurs radiaux, que les deux unités de distribution (11a, 11b) sont disposées sur des côtés opposés par rapport au sens longitudinal (18) de la moissonneuse-batteuse (1), et que les deux unités de distribution peuvent être pilotées indépendamment l'une de l'autre au moyen du système d'assistance au conducteur (2) .
